# EUROPÄISCHE PATENTSCHRIFT

(11) **EP 4 038 264 B1**
(45) Veröffentlichungstag und Bekanntmachung des Hinweises auf die Patenterteilung: **26.02.2025**
(21) Anmeldenummer: 20760754.0
(22) Anmeldetag: 05.08.2020
(51) Int. Cl.: F01D 5/30, F01D 11/00

(54) **SYSTEM MIT EINER LAUFSCHAUFEL FÜR EINE GASTURBINE MIT EINEM EINEN DICHTUNGSABSCHNITT AUFWEISENDEN SCHAUFELFUSSSCHUTZBLECH**
SYSTEM WITH A ROTOR BLADE FOR A GAS TURBINE WITH A BLADE ROOT PROTECTION SHEET HAVING A SEALING SECTION
SYSTÈME AVEC UNE AUBE DE ROTOR POUR UNE TURBINE À GAZ AVEC UNE TÔLE DE PROTECTION AYANT UNE SECTION D'ÉTANCHÉITÉ

(30) Priorität: 02.10.2019 DE 102019215220
(43) Veröffentlichungstag der Anmeldung: 10.08.2022
(73) Patentinhaber: MTU Aero Engines AG, 80995 München (DE)
(72) Erfinder: PERNLEITNER, Martin, 80995 München (DE); FRENO, Dieter, 80995 München (DE); DOPFER, Manfred, 80995 München (DE)
(86) Internationale Anmeldenummer: PCT/DE2020/000179
(87) Internationale Veröffentlichungsnummer: WO 2021/063431

(56) Entgegenhaltungen:
- CH-A- 526 716
- FR-A1- 2 951 494
- US-A1- 2016 153 303
- US-A1- 2017 145 841

## Beschreibung

Die vorliegende Erfindung betrifft ein System mit einer Laufschaufel für eine Gasturbine, insbesondere Fluggasturbine, mit einem Schaufelfuß, einem sich in Radialrichtung an den Schaufelfuß anschließenden Schaufelhals, einem sich in Radialrichtung an den Schaufelhals anschließenden Schaufelblatt, einer radial äußeren Schottwand, welche einen radial inneren Begrenzungsabschnitt eines Ringraums einer Gasturbine bildet, einer axial vorderen Schottwand und einer axial hinteren Schottwand, die mit der radial äußeren Schottwand verbunden sind, so dass die Schottwände den Schaufelhals von drei Seiten umgeben, wobei die Schottwände in Umfangsrichtung über den Schaufelhals vorstehen, und mit einem für die Anordnung an dem Schaufelfuß vorgesehenen Schaufelfußschutzblech.

Richtungsangaben wie "Axial-" bzw. "axial", "Radial-" bzw. "radial" und "Umfangs-" sind grundsätzlich auf die Maschinenachse der Gasturbine bezogen zu verstehen, sofern sich aus dem Kontext nicht explizit oder implizit etwas anderes ergibt.

Derart aufgebaute Laufschaufeln haben keine radial innere Schottwand, wie dies von bisherigen Laufschaufeln bekannt ist. Bei den bekannten Laufschaufeln bilden eine radial äußere Schottwand, eine radial innere Schottwand und die axial vordere und hintere Schottwand eine einstückige (integrale) Kastenform, die den Schaufelhals umgibt, insbesondere in Umfangsrichtung über diesen vorsteht. Aus Gewichtsgründen und Gründen der schwierigen Werkzeugsgestaltung bei Laufschaufeln mit konturierten Ringraum ist es vorteilhaft, wenn die radial innere Schottwand weggelassen wird. Hierdurch ergibt sich aber die Problematik, dass es im Bereich der fehlenden radial inneren Schottwand zu Heißgaseinzug kommen kann, was zu einer unerwünschten Erhitzung der Laufschaufelscheibe führen kann.

Schutzbleche für einen Schaufelfuß sind aus den Dokumenten FR2951494A1, US20170145841A1 und CH526716A bekannt. Aus der US20160153303A1 ist ein Dämpfer zur Anordnung in einem Bereich unter den Plattformen zweier benachbarter Schaufeln bekannt.

Die der Erfindung zu Grunde liegende Aufgabe wird darin gesehen, ein System mit einer Laufschaufel bereitzustellen, bei dem einerseits Gewicht eingespart, aber auch die Abdichtung gegenüber dem Heißgas führenden Ringraum verbessert werden kann.

Zu Lösung dieser Aufgabe wird ein System mit einer Laufschaufel mit den Merkmalen des Anspruchs 1 vorgeschlagen. Weitere optionale und vorteilhafte Merkmale sind in den abhängigen Ansprüchen angegeben.

Vorgeschlagen wird also ein System mit einer Laufschaufel für eine Gasturbine, insbesondere Fluggasturbine, mit einem Schaufelfuß, einem sich in Radialrichtung an den Schaufelfuß anschließenden Schaufelhals, einem sich in Radialrichtung an den Schaufelhals anschließenden Schaufelblatt, einer radial äußeren Schottwand, welche einen radial inneren Begrenzungsabschnitt eines Ringraums einer Gasturbine bildet, einer axial vorderen Schottwand und einer axial hinteren Schottwand, die mit der radial äußeren Schottwand verbunden sind, so dass die Schottwände den Schaufelhals von drei Seiten umgeben, wobei die Schottwände in Umfangsrichtung über den Schaufelhals vorstehen, und mit einem für die Anordnung an dem Schaufelfuß vorgesehenen Schaufelfußschutzblech. Dabei ist vorgesehen, dass das Schaufelfußschutzblech wenigstens einen Dichtungsabschnitt aufweist, der sich in Axialrichtung von der vorderen Schottwand zu der hinteren Schottwand erstreckt und dessen radiale Außenseite gegenüber der radial äußeren Schottwand angeordnet ist, wenn das Schaufelschutzblech am Schaufelfuß angeordnet ist.

Durch das Vorsehen eines Dichtabschnitts an dem Schaufelfußschutzblech kann eine Dichtungswirkung erreicht werden, die dem Einzug von Heißgas entgegenwirkt. Da Schaufelfußschutzbleche bereits üblicherweise eingesetzt werden, ist die Gewichtszunahme beim Schaufelfußschutzblech durch den zusätzlichen Dichtabschnitt nur geringfügig. In jedem Fall ist die Masse eines Dichtabschnitts am Schaufelfußschutzblech deutlich geringer als die Masse einer radial inneren Schottwand.

Die Schottwände und der Schaufelhals bilden eine nach radial unten offene Tasche und der Dichtungsabschnitt, wenn das Schaufelfußschutzblech am Schaufelfuß angeordnet ist, schließt die Tasche vollständig nach radial unten.

Der Dichtabschnitt kann im zusammengesetzten Zustand des System einen Zwischenraum überbrücken, der zwischen einem überstehenden Abschnitt der axial vorderen Schottwand und einem überstehenden Abschnitt der axial hinteren Schottwand gebildet ist.

Entsprechend deckt der Dichtabschnitt des Schaufelfußschutzblechs genau den Bereich ab, der durch die weggelassene radial innere Schottwand frei bleibt.

Die radial äußere Schottwand, die axial vordere Schottwand, die axial hintere Schottwand und der Dichtabschnitt des Schaufelfußschutzblechs können ein kastenartiges Profil bilden, das den Schaufelhals umgibt. Dabei kann der Dichtabschnitt mit seiner radialen Außenseite an der axial vorderen und hinteren Schottwand anliegen bzw. ein Abstand zu diesen ist sehr gering, um die gewünschte Dichtwirkung zu erreichen.

Um eine optimale Dichtwirkung zu erhalten, kann der Dichtabschnitt in Axialrichtung im Wesentlichen die gleiche Länge aufweisen wie der Schaufelfuß.

Der Dichtabschnitt kann wenigstens eine Sicke aufweisen, die insbesondere entlang der Axialrichtung oder entlang der Umfangsrichtung ausgebildet ist. Das Ausbilden von wenigstens einer Sicke führt zu einer Versteifung des in der Regel eher dünn ausgebildeten Dichtabschnitts des Schaufelfußschutzblechs. Somit kann durch das Vorsehen von wenigstens einer Sicke die Stabilität des Dichtabschnitts verbessert werden. Ferner kann eine Sicke auch derart ausgestaltet sein, dass eine verbesserte Dichtwirkung erreicht wird.

Die oben genannte Aufgabe wird auch gelöst durch eine Laufschaufelscheibe mit mehreren in Umfangsrichtung nebeneinander angeordneten Laufschaufelaufnahmen, in die ein Schaufelfuß einer jeweiligen Laufschaufel des Systems eingeführt ist, wie es oben beschrieben worden ist, und mit mehreren zwischen den Laufschaufelaufnahmen ausgebildeten Scheibenhöckern. Dabei ist der Dichtabschnitt des Schaufelfußschutzblechs mit seiner radialen Innenseite gegenüber einer radialen Außenseite eines betreffenden Scheibenhöckers angeordnet. Somit kann der Dichtabschnitt das Eindringen bzw. Einziehen von Heißgas zu den Scheibenhöckern wirksam verhindern.

Schließlich wird die obige Aufgabe auch gelöst durch eine Gasturbine, insbesondere Fluggasturbine mit wenigstens einer solchen Laufschaufelscheibe. Dabei kann die Laufschaufelscheibe insbesondere Teil einer Turbinenstufe der Gasturbine sein.

Nachfolgend wird die Erfindung unter Bezugnahme auf die anliegenden Figuren beispielhaft und nicht einschränkend beschrieben.
Fig. 1 zeigt in einer vereinfachten schematischen Darstellung ein Prinzipbild einer Fluggasturbine.
Fig. 2 zeigt in einer vereinfachten und schematischen Perspektivdarstellung eine Laufschaufel mit Schaufelfußschutzblech.
Fig. 3 zeigt eine Schnittdarstellung etwa entsprechend der Schnittlinie III-III der Fig. 2.
Fig. 4 zeigt eine zur Fig. 3 ähnliche Schnittdarstellung, wobei in einem Dichtabschnitt des Schaufelfußschutzblechs eine Sicke ausgebildet ist.

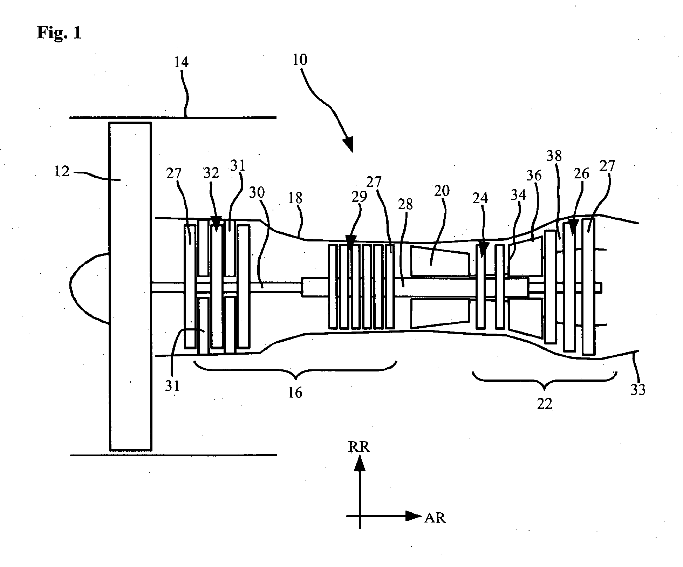

Fig. 1 zeigt schematisch und vereinfacht eine Fluggasturbine 10, die rein beispielhaft als Mantelstromtriebwerk illustriert ist. Die Gasturbine 10 umfasst einen Fan 12, der von einem angedeuteten Mantel 14 umgeben ist. In Axialrichtung AR der Gasturbine 10 schließt sich an den Fan 12 ein Verdichter 16 an, der in einem angedeuteten inneren Gehäuse 18 aufgenommen ist und einstufig oder mehrstufig ausgebildet sein kann. An den Verdichter 16 schließt sich die Brennkammer 20 an. Aus der Brennkammer ausströmendes heißes Abgas strömt dann durch die sich anschließende Turbine 22, die einstufig oder mehrstufig ausgebildet sein kann. Im vorliegenden Beispiel umfasst die Turbine 22 eine Hochdruckturbine 24 und eine Niederdruckturbine 26. Eine Hohlwelle 28 verbindet die Hochdruckturbine 24 mit dem Verdichter 16, insbesondere einem Hochdruckverdichter 29, so dass diese gemeinsam angetrieben bzw. gedreht werden. Eine in Radialrichtung RR der Turbine weitere innen liegende Welle 30 verbindet die Niederdruckturbine 26 mit dem Fan 12 und mit einem Niederdruckverdichter 32, so dass diese gemeinsam angetrieben bzw. gedreht werden. An die Turbine 22 schließt sich eine hier nur angedeutete Schubdüse 33 an.

Im dargestellten Beispiel einer Fluggasturbine 10 ist zwischen der Hochdruckturbine 24 und der Niederdruckturbine 26 ein Turbinenzwischengehäuse 34 angeordnet, das um die Wellen 28, 30 angeordnet ist. In seinem radial äußeren Bereich 36 wird das Turbinenzwischengehäuse 34 von heißen Abgasen aus der Hochdruckturbine 24 durchströmt. Das heiße Abgas gelangt dann in einen Ringraum 38 der Niederdruckturbine 26. Von den Verdichtern 29, 32 und den Turbinen 24, 26 sind beispielhaft Laufschaufelkränze 27 dargestellt. Üblicherweise vorhandene Leitschaufelkränze 31 sind aus Gründen der Übersicht beispielhaft nur bei dem Verdichter 32 dargestellt.

Die nachfolgende Beschreibung einer Ausführungsform der Erfindung bezieht sich insbesondere auf die Laufschaufeln, die in einem Laufschaufelkranz 27 des Verdichters 16 oder der Turbine 22 eingesetzt werden können.

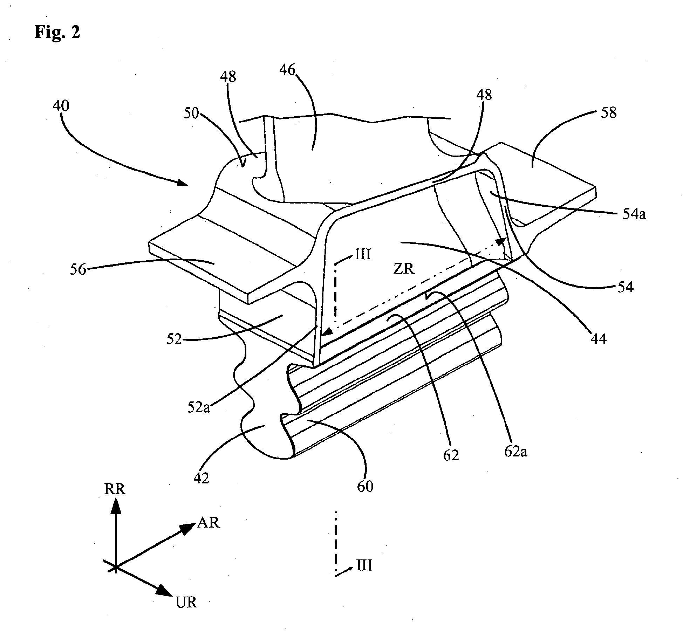

Fig. 2 zeigt eine vereinfachte und schematische Perspektivdarstellung einer Laufschaufel 40 für ein erfindungsgemäßes System. Die Laufschaufel 40 umfasst einen Schaufelfuß 42. Der Schaufelfuß 42 ist hier beispielhaft als mit einem sogenannten Tannenbaumprofil ausgebildet. In Radialrichtung RR schließt sich an den Schaufelfuß42 ein Schaufelhals 44 an. Der Schaufelhals 44 geht in das Schaufelblatt 46 über.

Die Laufschaufel 40 umfasst ferner eine radial äußere Schottwand 48, die zwischen dem Schaufelblatt 46 und dem Schaufelhals 44 angeordnet ist. Die radiale Außenseite 50 der Schottwand 48 bildet einen Teil eines Ringraums einer Gasturbine, wenn die Laufschaufel 40 bestimmungsgemäß in einer Gasturbine eingebaut ist. Die Laufschaufel 40 umfasst weitere eine axial vordere Schottwand 52 und eine axial hintere Schottwand 54. Die axial vordere Schottwand 52 und die axial hintere Schottwand 54 sind mit der radial äußeren Schottwand 48 verbunden, insbesondere integral ausgebildet. Wie aus der Fig. 2 ersichtlich umgeben die Schottwände 48, 52, 54 den Schaufelhals 44 von drei Seiten. Mit der jeweiligen Schottwand 52, 54 kann ein vorderer Deckbandabschnitt 56 bzw. ein hinterer Deckbandabschnitt 58 verbunden sein.

Entlang des Schaufelfußes 42, insbesondere entlang dessen Außenkontur, ist ein Schaufelfußschutzblech 60 angeordnet. Das Schaufelfußschutzblech 60 umfasst radial außen einen Dichtabschnitt 62. Der Dichtabschnitt 62erstreckt sich in Axialrichtung AR von der vorderen Schottwand 52 zu der hinteren Schottwand 54. Insbesondere überbrückt der Dichtabschnitt 62 einen Zwischenraum ZR, der zwischen der vorderen Schottwand 52 und der hinteren Schottwand 54 ausgebildet ist. Insbesondere ist der Dichtabschnitt derart dimensioniert, dass er den Zwischenraum ZR überbrückt, der zwischen einem überstehenden Abschnitt 52a der axial vorderen Schottwand 52 und einem überstehenden Abschnitt 54a der axial hinteren Schottwand 54 gebildet ist. Die Abschnitte 52a, 52 stehen dabei in Umfangsrichtung UR über den Schaufelhals 44 vor. Eine radiale Außenseite 62a des Dichtabschnitts 62 ist in Radialrichtung RR gegenüber der radial äußeren Schottwand 48 angeordnet.

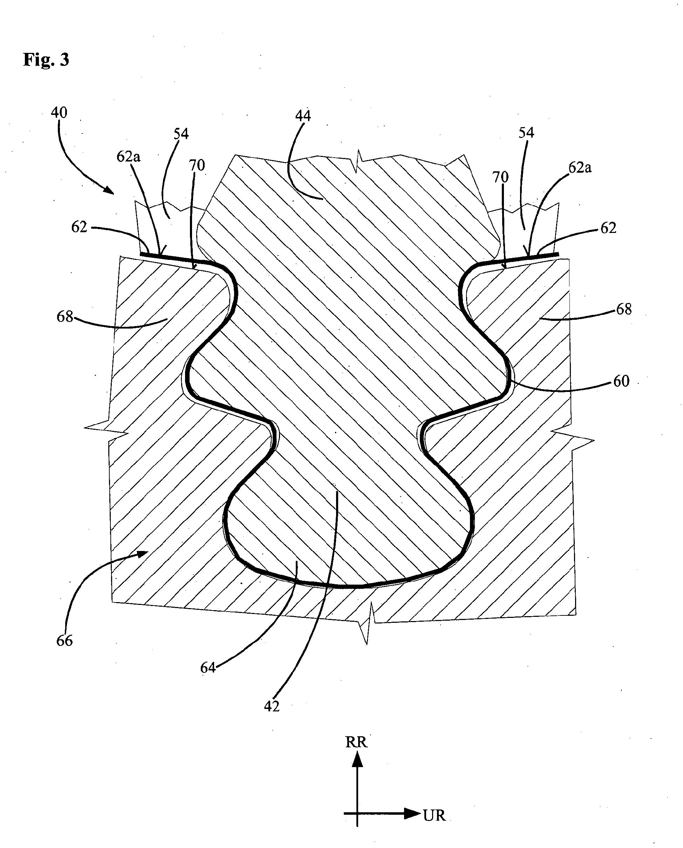

Fig. 3 zeigt in einer vereinfachten und schematischen Schnittdarstellung, die etwa der Schnittlinie III-III der Fig. 2 entspricht, den Schaufelfuß 42, der in einer Schaufelfußaufnahme 64 einer Laufschaufelscheibe 66 aufgenommen ist. Die Laufschaufelscheibe 66 umfasst üblicherweise mehrere in Umfangsrichtung UR nebeneinander angeordnete Laufschaufeln 40. Dabei ist ein jeweiliger Schaufelfuß 42 zwischen zwei benachbarten Scheibenhöckern 68 der Laufschaufelscheibe 66 aufgenommen.

Aus der Fig. 3 ist ferner das Schaufelfußschutzblech 60 ersichtlich, das als dicke schwarze Linie vereinfacht dargestellt ist. Das Schaufelfußschutzblech 60 umfasst radial außen den Dichtabschnitt 62. Der Dichtabschnitt 62 ist gegenüber einer jeweiligen radialen Außenfläche 70 eines betreffenden Scheibenhöckers 68 angeordnet. Insbesondere deckt der Dichtabschnitt 62 den betreffenden Scheibenhöcker 68 zumindest teilweise ab. In Axialrichtung ist noch ein Teil der hinteren Schottwand 54 ersichtlich.

Aus der Zusammenschau der Fig. 2 und 3 ist ersichtlich, dass die Schottwände 48, 52, 56 zusammen mit dem Dichtabschnitt 62 eine Art kastenförmiges Profil bilden, das den Schaufelhals 44 umgibt bzw. einfasst. Der Dichtabschnitt 62 kann eine axiale Länge aufweisen, die im Wesentlichen der axialen Länge des Schaufelfußes 42 entspricht. Anders ausgedrückt kann auch davon gesprochen werden, dass die Schottwände (48, 52, 54) und der Schaufelhals (44) eine nach radial unten offene Tasche bilden und der Dichtungsabschnitt (62), wenn das Schaufelfußschutzblech (60) am Schaufelfuß (42) angeordnet ist, die Tasche nach radial unten vollständig schließt.

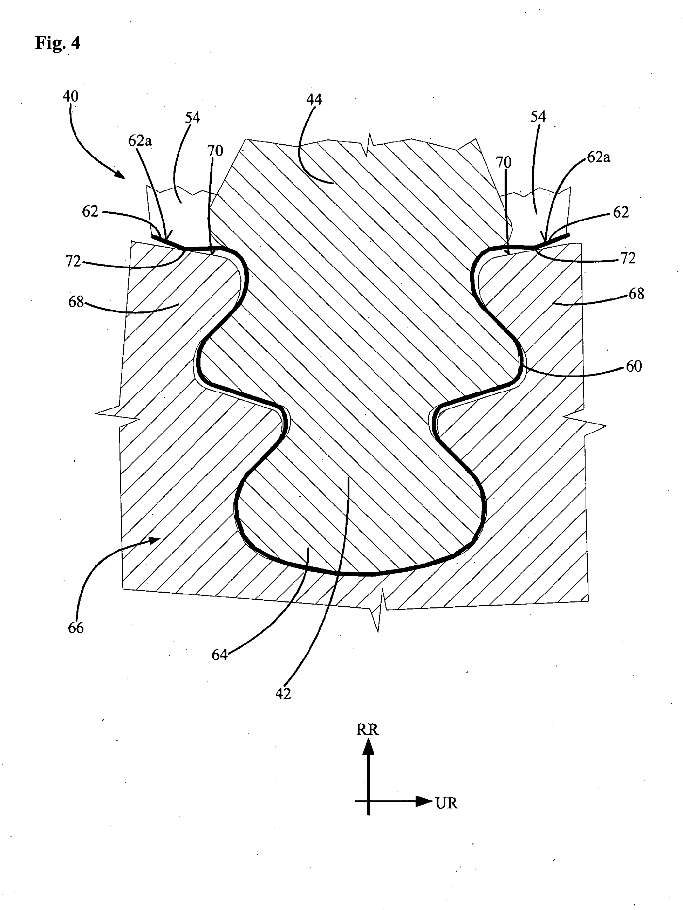

Fig. 4 zeigt eine zur Fig. 3 ähnliche Schnittdarstellung. Es sind daher in Fig. 4 auch die gleichen Bezugszeichen wie in Fig. 3 dargestellt, auch wenn diese in Bezug auf die Fig. 4 nicht erneut beschrieben werden. Fig. 4 zeigt ein Ausführungsbeispiel, bei dem im Dichtabschnitt 62 eine entlang der Axialrichtung verlaufende Sicke 72 ausgebildet ist. In dem Dichtabschnitt 62 kann nicht nur eine Sicke 72 ausgebildet sein. Es ist auch denkbar, dass beispielwiese mehrere parallel oder quer zueinander verlaufende Sicken ausgebildet sind. Insbesondere können auch mehrere in Umfangsrichtung UR verlaufende Sicken vorgesehen sein, die im Wesentlichen parallel zueinander entlang der Axialrichtung benachbart zueinander angeordnet sind. Die Ausbildung einer oder mehrerer Sicke(n) 72 dient insbesondere der Versteifung und Stabilisierung des Dichtabschnitts 62, der als Teil des Schaufelfußschutzblechs 60 aus einem relativ dünnen Blechmaterial hergestellt ist.

### Bezugszeichenliste

- 10: Fluggasturbine
- 12: Fan
- 14: Mantel
- 16: Verdichter
- 18: inneres Gehäuse
- 20: Brennkammer
- 22: Turbine
- 24: Hochdruckturbine
- 26: Niederdruckturbine
- 27: Laufschaufelkranz
- 28: Hohlwelle
- 29: Hochdruckverdichter
- 30: Welle
- 31: Leitschaufelkranz
- 32: Niederdruckverdichter
- 33: Schubdüse
- 34: Turbinenzwischengehäuse
- 36: radial äußerer Bereich
- 38: Ringraum
- 40: Laufschaufel
- 42: Schaufelfuß
- 44: Schaufelhals
- 46: Schaufelblatt
- 48: radial äußere Schottwand
- 50: radiale Außenseite der Schottwand
- 52: axial vordere Schottwand
- 52a: überstehender Abschnitt
- 54: axial hintere Schottwand
- 54a: überstehender Abschnitt
- 56: vorderer Deckbandabschnitt
- 58: hinterer Deckbandabschnitt
- 60: Schaufelfußschutzblech
- 62: Dichtabschnitt
- 62a: radiale Außenseite
- 64: Schaufelfußaufnahme
- 66: Laufschaufelscheibe
- 68: Scheibenhöcker
- 70: radiale Außenfläche des Scheibenhöckers
- 72: Sicke

## Patentansprüche

1. System mit einer Laufschaufel (40) für eine Gasturbine (10), insbesondere Fluggasturbine, mit
einem Schaufelfuß (42),
einem sich in Radialrichtung (RR) an den Schaufelfuß (42) anschließenden Schaufelhals (44),
einem sich in Radialrichtung (RR) an den Schaufelhals (44) anschließenden Schaufelblatt (46),
einer radial äußeren Schottwand (48) zur Bildung eines radial inneren Begrenzungsabschnitts (50) eines Ringraums einer Gasturbine (10),
einer axial vorderen Schottwand (52) und einer axial hinteren Schottwand (54), die mit der radial äußeren Schottwand (48) verbunden sind, so dass die Schottwände (48, 52, 54) den Schaufelhals (44) von drei Seiten umgeben, wobei die Schottwände (48, 52, 54) in Umfangsrichtung (UR) über den Schaufelhals (44) vorstehen, und
mit einem für die Anordnung an dem Schaufelfuß (42) vorgesehenen Schaufelfußschutzblech (60),
wobei das Schaufelfußschutzblech (60) wenigstens einen Dichtungsabschnitt (62) aufweist, der sich in Axialrichtung (AR) von der vorderen Schottwand (52) zu der hinteren Schottwand (54) erstreckt und dessen radiale Außenseite (62a) gegenüber der radial äußeren Schottwand (48) angeordnet ist, wenn das Schaufelfußschutzblech (60) am Schaufelfuß (42) angeordnet ist, wobei
die Schottwände (48, 52, 54) und der Schaufelhals (44) eine nach radial unten, d.h. nach radial innen, offene Tasche bilden, **dadurch gekennzeichnet, dass** der Dichtungsabschnitt (62), wenn das Schaufelfußschutzblech (60) am Schaufelfuß (42) angeordnet ist, die Tasche nach radial unten vollständig schließt.

2. System nach Anspruch 1, **dadurch gekennzeichnet, dass** der Dichtabschnitt (62) im zusammengesetzten Zustand des Systems einen Zwischenraum (ZR) überbrückt, der zwischen einem überstehenden Abschnitt (52a) der axial vorderen Schottwand (52) und einem überstehenden Abschnitt (54a) der axial hinteren Schottwand (54) gebildet ist.

3. System nach einem der vorhergehenden Ansprüche, **dadurch gekennzeichnet, dass** die radial äußere Schottwand (48), die axial vordere Schottwand (52), die axial hintere Schottwand (54) und der Dichtabschnitt (62) des Schaufelfußschutzblechs (60) ein kastenartiges Profil bilden, das den Schaufelhals (44) umgibt.

4. System nach einem der vorhergehenden Ansprüche, **dadurch gekennzeichnet, dass** der Dichtabschnitt (62) in Axialrichtung (AR) im Wesentlichen die gleiche Länge aufweist wie der Schaufelfuß (42).

5. System nach einem der vorhergehenden Ansprüche, **dadurch gekennzeichnet, dass** der Dichtabschnitt (62) wenigstens eine Sicke (72) aufweist, die insbesondere entlang der Axialrichtung (AR) oder entlang der Umfangsrichtung (UR) ausgebildet ist.

6. Laufschaufelscheibe (66) mit mehreren Systemen nach einem der vorhergehenden Ansprüche, mit mehreren in Umfangsrichtung nebeneinander angeordneten Laufschaufelaufnahmen (64), in die ein Schaufelfuß (42) einer jeweiligen Laufschaufel (40) des Systems nach einem der vorhergehenden Ansprüche eingeführt ist, und mit mehreren zwischen den Laufschaufelaufnahmen (64) ausgebildeten Scheibenhöckern (68), wobei der Dichtabschnitt (62) des Schaufelfußschutzblechs (60) mit seiner radialen Innenseite gegenüber einer radialen Außenseite (70) eines betreffenden Scheibenhöckers (68) angeordnet ist.

7. Gasturbine, insbesondere Fluggasturbine (10) mit wenigstens einer Laufschaufelscheibe (66) nach Anspruch 6, wobei die Laufschaufelscheibe insbesondere Teil einer Turbinenstufe der Gasturbine ist.

## Claims

1. System comprising a rotor blade (40) for a gas turbine (10), in particular an aircraft gas turbine, comprising
a blade root (42),
a blade neck (44) adjoining the blade root (42) in the radial direction (RR),
an airfoil (46) adjoining the blade neck (44) in the radial direction (RR),
a radially outer bulkhead wall (48) for forming a radially inner delimitation portion (50) of an annular space of a gas turbine (10),
an axially leading bulkhead wall (52) and an axially trailing bulkhead wall (54) which are connected to the radially outer bulkhead wall (48) such that the bulkhead walls (48, 52, 54) enclose the blade neck (44) from three sides, wherein the bulkhead walls (48, 52, 54) project beyond the blade neck (44) in the circumferential direction (UR), and
comprising a blade root protective plate (60) provided for arrangement on the blade root (42),
wherein the blade root protective plate (60) has at least one sealing portion (62) which extends in the axial direction (AR) from the leading bulkhead wall (52) to the trailing bulkhead wall (54) and the radially outer side (62a) thereof is arranged opposite the radially outer bulkhead wall (48) when the blade root protective plate (60) is arranged on the blade root (42), wherein the bulkhead walls (48, 52, 54) and the blade neck (44) form a pocket which is open radially at the bottom, i.e. radially inwards, **characterized in that** the sealing portion (62) completely closes the pocket radially at the bottom when the blade root protective plate (60) is arranged on the blade root (42).

2. System according to claim 1, **characterized in that,** in the assembled state of the system, the sealing portion (62) bridges a gap (ZR) which is formed between a projecting portion (52a) of the axially leading bulkhead wall (52) and a projecting portion (54a) of the axially trailing bulkhead wall (54).

3. System according to any of the preceding claims, **characterized in that** the radially outer bulkhead wall (48), the axially leading bulkhead wall (52), the axially trailing bulkhead wall (54) and the sealing portion (62) of the blade root protective plate (60) form a box-like profile which encloses the blade neck (44).

4. System according to any of the preceding claims, **characterized in that,** in the axial direction (AR), the sealing portion (62) is substantially the same length as the blade root (42).

5. System according to any of the preceding claims, **characterized in that** the sealing portion (62) has at least one bead (72) which is formed in particular in the axial direction (AR) or in the circumferential direction (UR).

6. Rotor blade disk (66) comprising a plurality of systems according to any of the preceding claims, comprising a plurality of rotor blade receptacles (64) arranged next to one another in the circumferential direction, into which a blade root (42) of a corresponding rotor blade (40) of the system according to any of the preceding claims is inserted, and comprising a plurality of disk humps (68) formed between the rotor blade receptacles (64), wherein the sealing portion (62) of the blade root protective plate (60) is arranged with its radially inner side opposite a radially outer side (70) of a corresponding disk hump (68).

7. Gas turbine, in particular aircraft gas turbine (10) comprising at least one rotor blade disk (66) according to claim 6, wherein the rotor blade disk is in particular part of a turbine stage of the gas turbine.

## Revendications

1. Système comportant une aube mobile (40) pour une turbine à gaz (10), en particulier une turbine à gaz d'aéronef, comportant
un pied d'aube (42),
un col d'aube (44) se raccordant au pied d'aube (42) dans la direction radiale (RR),
une pale d'aube (46) se raccordant au col d'aube (44) dans la direction radiale (RR),
une paroi de séparation (48) radialement extérieure pour la formation d'une section de limitation (50) radialement intérieure d'un espace annulaire d'une turbine à gaz (10),
une paroi de séparation (52) axialement avant et une paroi de séparation (54) axialement arrière, qui sont reliées à la paroi de séparation (48) radialement extérieure, de sorte que les parois de séparation (48, 52, 54) entourent le col d'aube (44) sur trois côtés, les parois de séparation (48, 52, 54) dépassant au-delà du col d'aube (44) dans la direction périphérique (UR), et
comportant une tôle de protection de pied d'aube (60) prévue pour la disposition sur le pied d'aube (42),
la tôle de protection de pied d'aube (60) présentant au moins une section d'étanchéité (62) qui s'étend dans la direction axiale (AR) à partir de la paroi de séparation (52) avant jusqu'à la paroi de séparation (54) arrière et dont le côté extérieur (62a) radial est disposé en regard de la paroi de séparation (48) radialement extérieure, lorsque la tôle de protection de pied d'aube (60) est disposée sur le pied d'aube (42), les parois de séparation (48, 52, 54) et le col d'aube (44) formant une cavité ouverte radialement vers le bas, c'est-à-dire radialement vers l'intérieur, **caractérisé en ce que** la section d'étanchéité (62), lorsque la tôle de protection de pied d'aube (60) est disposée sur le pied d'aube (42), ferme complètement la cavité radialement vers le bas.

2. Système selon la revendication 1, **caractérisé en ce que** la section d'étanchéité (62), dans l'état assemblé du système, surmonte un espace intermédiaire (ZR) qui est formé entre une section (52a) saillante de la paroi de séparation (52) axialement avant et une section (54a) saillante de la paroi de séparation (54) axialement arrière.

3. Système selon l'une des revendications précédentes,
**caractérisé en ce que** la paroi de séparation (48) radialement extérieure, la paroi de séparation (52) axialement avant, la paroi de séparation (54) axialement arrière et la section d'étanchéité (62) de la tôle de protection de pied d'aube (60) forment un profilé de type caisson qui entoure le col d'aube (44).

4. Système selon l'une des revendications précédentes,
**caractérisé en ce que** la section d'étanchéité (62) présente dans la direction axiale (AR) sensiblement la même longueur que le pied d'aube (42).

5. Système selon l'une des revendications précédentes,
**caractérisé en ce que** la section d'étanchéité (62) présente au moins une moulure (72) qui est réalisée en particulier le long de la direction axiale (AR) ou le long de la direction périphérique (UR).

6. Disque à aubes mobiles (66) comportant plusieurs systèmes selon l'une des revendications précédentes, comportant plusieurs logements pour aubes mobiles (64) disposés côte à côte dans la direction périphérique, dans lesquels est inséré un pied d'aube (42) d'une aube mobile (40) respective du système selon l'une des revendications précédentes, et comportant plusieurs bossages de disque (68) réalisés entre les logements pour aubes mobiles (64), la section d'étanchéité (62) de la tôle de protection de pied d'aube (60) étant disposée avec son côté intérieur radial en regard d'un côté extérieur (70) radial d'un bossage de disque (68) concerné.

7. Turbine à gaz, en particulier turbine à gaz d'aéronef (10) comportant au moins un disque à aubes mobiles (66) selon la revendication 6, le disque à aubes mobiles faisant en particulier partie d'un étage de turbine de la turbine à gaz.
